# EUROPEAN PATENT APPLICATION

(11) **EP 1 217 860 A1**
(43) Date of publication of application: **26.06.2002**
(21) Application number: 01660243.5
(22) Date of filing: 20.12.2001
(51) Int. Cl.: H04Q 7/38

(54) **Device for context based data logging, monitoring and reminding**

(30) Priority: 21.12.2000 FI 20002812
(71) Applicant: Nokia Corporation, 02150 Espoo (FI)
(72) Inventor: Tuomela, Urpo, 90100 Oulu (FI); Mäntyjärvi, Jani, 02320 Espoo (FI); Kangas, Petri, 90800 Oulu (FI); Kaartinen, Sanna, 90500 Oulu (FI)
(74) Representative: Kupiainen, Juhani

(57) **Abstract**

The invention relates to a data logging and processing arrangement (10, 21, 22, 23, 24) and a device (10) (reminder) used in this arrangement, capable of processing user-specific data and making context-based decisions to guide the user so as to carry out important work/tasks at a given moment. Data to be processed are stored in an activity log in the reminder.

## Description

The invention relates to a data logging and processing device (reminder) of the patent claim, arranged so as to collect, process and indicate information needed by an individual user. The invention further relates to a personal data logging and processing arrangement which comprises one or more monitoring arrangements intended for personal data logging.

Remembering different things at the right time and in the right place puts a considerable strain on a person's memory. Forgetting an important thing or appointment, for instance, may cause great financial damage either to the forgetter himself or to some other person or organization involved. To aid the memory, various tools have been developed such as notes, diaries, calendar programs to be used in personal computers, etc. All these known means are somehow tied to place and always dependent of the user. An entry in a diary is of no help if the user of the diary does not check the contents of the diary often enough. Sometimes another person has to perform some activity in order to make a piece of information accessible to a person. If the said another person forgets to perform that activity, it may significantly influence the decisions made by the person.

Furthermore, we know of various monitoring arrangements and devices, such as pulse meters, intended for fitness improvement or health monitoring. With these arrangements it is possible to monitor a person's health status or possible need for medical help. Such monitoring arrangements are limited to monitoring a certain function of a person at a desired time.

The object of the present invention is to provide a novel context-based arrangement and device/reminder for controlling the activity status data of an individual or a member of a work group.

The objects of the invention are achieved by an arrangement in which a person carries with him a personal context-based information storage means/communications means, called a reminder. In this reminder it is possible to store, according to the needs of the person, context-based data, hereinafter called activity status data, either by the person himself or by some other person, or data may be automatically stored in it when the person moves in a certain area. Activity status data advantageously comprise data of the following kinds: the geographical location of the user of the reminder, time zone of the user, whether the user is in his principal place of work, whether the user is using his workstation, portable computer or telephone at a given moment, whether the user is in conference, whether the user is on a vacation, whether the user is on a business trip, whether the user is awake, whether the user is occupied in a hobby, etc. Similarly, the activity status information may comprise data about the user's current physical and mental condition as well as health. Such data may be collected by the user's own reminder, various sensors connected to the user or through the data network of the user's workplace. The user himself may also enter the desired data in an activity log in the reminder. Context-based activity status data are conveyed to the user only when he is looking for it or when a certain criterion relating to a certain context, time, place or activity is met.

The data collecting and processing device (reminder) is characterized in that it comprises a control unit equipped with a means arranged so as to make decisions based on a context to guide the actions of the user or the reminder.

The personal data collecting and processing arrangement according to the invention is characterized in that the said arrangement comprises a personal reminder adapted so as make decisions based on a context.

Some advantageous embodiments of the invention are specified in the dependent claims.

The basic idea of the invention is as follows. A person carries with him a context-based reminder. In this device it is possible to log either by the person himself or by some other person, data relating to different things, used for making various decisions. Likewise it is possible that data are recorded in the reminder automatically in some events/contexts by means of a wireless data transfer system. Such a wireless data transfer system may be e.g. a Bluetooth-based link or cellular telephone network. The device processes the data input and stores the data collected either permanently or for a certain period of time. This storing is done in the activity log of the reminder. Depending on the actions and movements (activity status) of the person, different things can be done or become topical/urgent. When such a decision criterion, or a change in activity (e.g. a given activity is started), which is known to the reminder, is met, the latter informs the user about the contents of a particular reminding entry: For example, when the person leaves a meeting the reminder informs him of an urgent message. The reminder is advantageously set (by the person sending the message) to remind the user in the next "unbusy activity situation". After that, the person may deal with the matter as he sees fit. When the information has been delivered or the matter has been dealt with, the entry is removed from the activity log of the reminder either by the user or automatically.

An advantage of the invention is that the context-based information needed by a person at a given moment is at his disposal at all times.

Another advantage of the invention is that there is no need for several separate data logging methods/devices but a single reminder can do the job.

A further advantage of the invention is that a log is always kept in the device of the actions performed.

The invention is below described in detail. Reference is made to the attached drawings in which
- Fig. 1: shows by way of example the main structural components of a context-based reminder, and
- Fig. 2: shows by way of example a context-based data logging and processing arrangement.

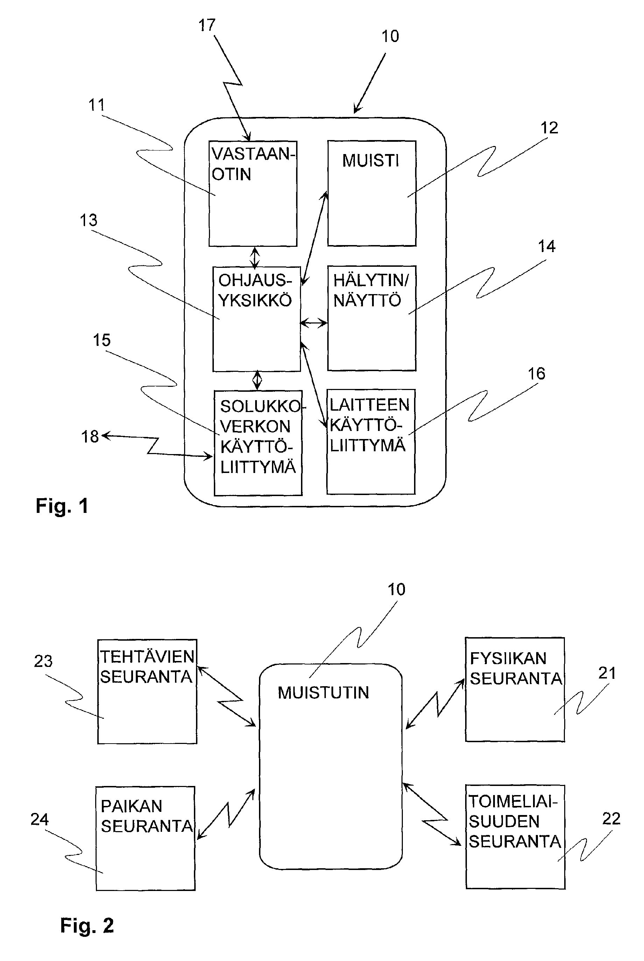

Fig. 1 shows by way of example the main components of a context-based reminder 10 according to the invention. A control unit 13 is a central part in the reminder 10. One of its tasks is to control the other functional elements in the reminder according to the invention. In addition, the control unit constantly makes decisions about when a certain piece of information stored in the memory 12 of the device either has to be communicated to the user of the device or the conditions according to the decision criteria, which reside in the memory of the device, are otherwise suitable for conveying the information to the user of the device.

Memory 12 stores the activity data coming to the device in different contexts either temporarily or permanently. This part of the memory 12 is hereinafter called an activity log. As such, the actual memory 12 may be part of the electrical circuit of the reminder 10 itself or part of an element attachable to the reminder, which identifies the user, such as advantageously a SIM card (Subscriber Identity Module). Storing to the activity log in the memory 12 is advantageously controlled by the control unit 13 of the reminder. Data to be stored may arrive in the reminder 10 via many different routes. Data may be entered using the user interface 16 proper of the device. This user interface 16 may be any existing procedure for entering data in an electronic apparatus. The user interface 16 may advantageously be a normal keyboard, it may be a keypad used in cellphones, or it could be a kind of virtual keyboard created artificially, likewise it is possible to use an audio-based data input device, or an infrared link may be established to a personal computer.

Data may be entered in the reminder 10 also through a wireless link 17 utilizing the receiver 11 in the reminder. A wireless link is advantageously realized using a commercially available system. Advantageously the link may be realized by a so-called Bluetooth link designed for communication between separate electrically-operated devices. Through this wireless link data arrive in the reminder 10 and are automatically stored in the memory of the device for possible future use.

The user of the reminder receives information about the data stored and processed by the reminder through an alarm/display unit 14. This unit may communicate to the user using audio messages, light messages, display messages, or through vibration or in some other manner which is noticeable and understandable to the holder of the device.

Advantageously the reminder may also comprise a mobile phone user interface 15 applicable in a known cellular network. In that case the reminder 10 advantageously functions through a second wireless link 18 as a terminal in that cellular network in addition to the reminder function proper. A reminder according to this embodiment advantageously functions as a cellular phone as well.

Fig. 2 shows by way of example some other possible devices/arrangements connected with the reminder 10 according to the invention. These devices/arrangements are commercially available from various manufacturers. The devices/arrangements shown in Fig. 2 advantageously communicate with the reminder through a wireless link arrangement.

A physical monitoring arrangement 21 shown by way of example in Fig. 2 is used for monitoring the physical activity of the user of the reminder. The activity monitoring advantageously comprises information about the status of the physical stress of a person: resting, awake, walking, running, sitting, driving or sleeping. Health data may also be collected, such as heartbeat, respiration rate or blood sugar level. Based on these data the reminder makes decisions in different contexts and conveys the said decisions to the user according to known decision criteria associated with the different contexts.

An activity monitoring arrangement 22 shown by way of example in Fig. 2 is advantageously used for monitoring the current activity/actions of the user of the reminder. Such activities to monitor include e.g. whether the person is alone, whether he is speaking, etc. The reminder makes a decision about conveying a message/piece of information to the user based on the urgency or importance of the message and on information about the activity of the user. The decision is based on the ability of the user to receive the piece of information and to take measures accordingly.

By means of the location monitoring arrangement 24 shown by way of example in Fig. 2 the reminder knows where the person is at a given moment. Various location data systems are commercially available from different manufacturers. With this arrangement the reminder can provide the user with information telling the user which tasks are suitable to be carried out at the place determined by the location monitoring arrangement. For example, a certain action/task has to be performed during the day. When the user of the reminder arrives at a place where the action can be carried out the reminder gives the user a signal/message indicating just that. The user may personally acknowledge the message or it may be acknowledged automatically. Likewise it is possible that data are conveyed to the reminder from devices at different locations when the user of the reminder arrives in the vicinity of such a device. For example, a mailbox used by the user of the reminder may send to the reminder an indication about mail that has arrived in the mailbox when the user of the reminder comes near the mailbox.

A task monitoring arrangement 23 shown by way of example in Fig. 2 sends to the reminder information about the work/task the user of the reminder is performing at that moment. For example, if the user is working at his personal computer, a message of that is sent to the reminder. Thus the reminder may take it into account when making decisions. Likewise, a sensor in a conference room advantageously sends to the reminder information indicating that the user of the reminder is at a place where only important messages are allowed to be passed on.

Above it was described some embodiments according to the invention. The invention is not limited to the solutions just described. For example, the reminder may be able to communicate with a great number of other devices and systems not mentioned in the explanatory cases described above. In addition, the inventional idea may be applied in numerous ways within the limits defined by the attached claims.

## Claims

1. A data logging and processing device (10) (reminder), arranged so as to collect, process and indicate information needed by an individual user, **characterized in that** the reminder comprises a control unit (13) equipped with means arranged so as to make context-based decisions to guide the actions of the user of the reminder.

2. A data logging and processing device according to claim 1, **characterized in that** it further comprises a memory (12) part of which is arranged so as to provide an activity log in the reminder.

3. A reminder according to claim 2, **characterized in that** it further comprises an alarm/display part (14), user interface (16) for the device, and a receiver (11).

4. A reminder according to claim 3, **characterized in that** it further comprises a means (15) with which the reminder is arranged so as to function as a terminal in a cellular network.

5. A reminder according to claim 4, **characterized in that** the cellular network terminal is arranged so as to function as a personal cellular phone.

6. A personal data logging and processing arrangement comprising one or more monitoring arrangements (21, 22, 23, 24) for personal data logging, **characterized in that** the said arrangement further comprises a personal reminder (10) arranged so as to make context-based decisions.

7. A data logging and monitoring arrangement according to claim 6, **characterized in that** the monitoring arrangements (21, 22, 23, 24) are arranged so as to communicate their data through a wireless link (17) to the reminder (10).

8. A data logging and processing arrangement according to claim 7, **characterized in that** the data communicated by the monitoring arrangements (21, 22, 23, 24) are arranged so as to be stored in an activity log in the memory (12) of the reminder (10).

9. A data logging and monitoring arrangement according to claim 7, **characterized in that** the monitoring arrangement used is one of the following: a physical monitoring arrangement (21), an activity monitoring device (22), a location monitoring arrangement (24) or a task monitoring arrangement (23).
